# EUROPEAN PATENT APPLICATION

(11) **EP 2 144 237 A1**
(43) Date of publication of application: **13.01.2010**
(21) Application number: 09150339.1
(22) Date of filing: 09.01.2009
(51) Int. Cl.: G11B 7/125, G11B 7/08

(54) **Multi-wavelength micro holographic data recording/reproducing apparatus**

(30) Priority: 10.07.2008 KR 20080067214
(71) Applicant: Samsung Electronics Co., Ltd., Yeongtong-gu Suwon-si, Gyeonggi-do (KR)
(72) Inventor: Bae, Jae-cheol 104-1405 Dongsuwon LG Village 1-cha Apt., Gyeonggi-do (KR); Kim, Tae-kyung, Seoul (KR); Jeong, Taek-seong 553-1002 Sinnamusil Jinheung Apt., Gyeonggi-do (KR)
(74) Representative: Grootscholten, Johannes A.M.

(57) **Abstract**

A multi-wavelength micro holographic data recording and/or reproducing apparatus in which decentering of light beams having different wavelengths is compensated for, the apparatus including: at least two light sources emitting the light beams; at least two photodetectors respectively detecting the light beams reflected from an optical recording medium; and an optical system guiding the light beams emitted from the light sources to the optical recording medium along a common optical path and guiding the light beams reflected from the optical recording medium to corresponding photodetectors, wherein the optical system includes: an objective lens focusing a light beam on the optical recording medium; a common decenter compensation member provided on the common optical path to adjust traveling angles of the light beams; and an individual decenter compensation member provided on an individual optical path of a light beam of individual wavelength to adjust a traveling angle of the light beam.

## Description

### BACKGROUND OF THE INVENTION

### 1. Field of the Invention

Aspects of the present invention relate to a holographic data recording and/or reproducing apparatus, and more particularly, to a multi-wavelength micro holographic data recording and/or reproducing apparatus in which decentered light beams having different wavelengths are compensated for.

### 2. Description of the Related Art

Hologram technology can reproduce an optical signal as a stereoscopic image by recording an interference pattern created between a signal beam that carries a signal and a reference beam reflected at a different angle from the signal beam. Optical storage technology to record and reproduce digital data by using holographic technologies has recently been developed and received much attention. Holographic information recording and reproducing technology allows recording and reproducing in units of pages by which digital data is simultaneously recorded or reproduced in the shape of a two-dimensional image. Thus, an ultra-high speed recording and reproducing system can be implemented. In addition, holographic optical storage technology can even separate and read information that spatially overlaps and the information can be stored by using an appropriate multiplexing technique. Thus, data information of several pages can be recorded, even if the pages overlap and are reproduced in the same region.

Examples of a holographic data recording and/or reproducing apparatus, which operates based on holographic technologies, include a multi-wavelength micro holographic data recording and/or reproducing apparatus to store data in units of bits on an optical recording medium by wavelength multiplexing. In multi-wavelength micro holographic data recording and/or reproducing apparatuses, a single objective lens focuses light beams having different wavelengths emitted from a plurality of light sources on an optical recording medium. To simultaneously record or reproduce data by using light beams having different wavelengths, optical paths of light beams having different wavelengths should be accurately coincident with each other. In addition, for each light beam, a signal beam and a reference beam on the optical recording medium should be coincident with each other in a focus direction of the objective lens and in radial and tangential directions of the optical recording medium.

However, if a decenter occurs in the focus direction of the objective lens, the radial direction of the optical recording medium, and/or the tangential direction of the optical recording medium, diffraction efficiency is decreased. Therefore, the decrease in diffraction efficiency should be compensated for. Decenter in the focus direction of the objective lens can be compensated for by appropriate design of the objective lens. However, to compensate for decenter in the radial and tangential directions of the optical recording medium, a separate compensation member and a control member to control the compensation member are needed. Specifically, in the case of wavelength multiplexing, light beams may be decentered by different amounts in the radial and tangential directions of the optical recording medium. As a result, different degrees of decenter should be individually compensated for and, thus, a complicated optical system is needed.

### SUMMARY OF THE INVENTION

Aspects of the present invention provide a multi-wavelength micro holographic data recording and/or reproducing apparatus in which decentered light beams having different wavelengths are compensated for.

In accordance with an example embodiment of the present invention, there is provided a holographic data recording and/or reproducing apparatus to record and/or reproduce data to/from an optical recording medium using light beams having different wavelengths, the apparatus including: at least two light sources emitting light beams having different wavelengths; at least two photodetectors respectively detecting the light beams reflected from the optical recording medium; and an optical system to guide the light beams having the different wavelengths to the optical recording medium along a common optical path and to guide the light beams having the different wavelengths reflected from the optical recording medium to the corresponding photodetectors, wherein the optical system includes: an objective lens to focus the light beams on the optical recording medium; a common decenter compensation member provided on the common optical path to adjust traveling angles of the light beams; and an individual decenter compensation member provided on an individual optical path of a light beam of individual wavelength to adjust a traveling angle of the light beam of individual wavelength.

According to an aspect of the present invention, the optical system may further include a dichroic prism to transmit a light beam having a predetermined wavelength and to reflect light beams having other wavelengths, different from the predetermined wavelength, and one of the at least two light sources emits a light beam transmitted by the dichroic prism and another light source emits a light beam reflected by the dichroic prism.

According to an aspect of the present invention, the individual decenter compensation member may be assigned to a light beam reflected by the dichroic prism.

According to an aspect of the present invention, the individual decenter compensation member may be a driven mirror that reflects an incident light to the dichroic prism.

According to an aspect of the present invention, the individual decenter compensation member may be adjusted according to an output of a photodetector for detecting the light beam reflected by the dichroic prism.

According to an aspect of the present invention, the common decenter compensation member may be a driven mirror that reflects a light beam traveling from the dichroic prism toward the objective lens.

According to an aspect of the present invention, the common decenter compensation member may be controlled according to an output of a photodetector for detecting a light beam transmitted by the dichroic prism.

According to an aspect of the present invention, the optical system may further include a light splitting member to divide each of the light beams emitted from the at least two light sources into a signal beam and a reference beam.

According to an aspect of the present invention, the light splitting member may include: a first beam splitter provided on the common optical path between the dichroic prism and the common decenter compensation member; a second beam splitter provided on the common optical path between the common decenter compensation member and the objective lens; a mirror to reflect a light beam travelling from the first beam splitter toward the second beam splitter; and a shutter provided on an optical path between the first beam splitter and the second beam splitter.

According to an aspect of the present invention, the shutter may open when data is recorded and may close when data is reproduced.

According to an aspect of the present invention, the light splitting member may further include: a third beam splitter provided between the shutter and the second beam splitter; and at least one dichroic prism to guide light beams having different wavelengths reflected from the third beam splitter to the at least two photodetectors.

According to an aspect of the present invention, the holographic data recording and/or reproducing apparatus may further include: a servo light source to emit a servo light beam for a focusing and tracking servo operation of the objective lens when data is recorded; a servo photodetector to detect the servo light beam reflected from the optical recording medium; and a servo optical system to guide the servo light beam emitted from the servo light beam source to the optical recording medium and to guide the servo light beam reflected from the optical recording medium to the servo photodetector.

According to an aspect of the present invention, the servo optical system may include: a servo dichroic prism provided on the common optical path between the common decenter compensation member and the objective lens; and a beam splitter to guide the servo light beam emitted from the servo light beam source toward the servo dichroic prism, and to guide the servo light beam reflected by the optical recording medium toward the servo photodetector.

According to an aspect of the present invention, the common decenter compensation member and the individual decenter compensation member may compensate for decentering in radial and tangential directions of the optical recording medium.

In accordance with another example embodiment of the present invention, there is provided a method of recording holographic data to an optical recording medium using light beams having different wavelengths, the method including: focusing, with an objective lens, a first light beam having a first wavelength on the optical recording medium and controlling a first decenter compensation member according to the first light beam having the first wavelength reflected from the optical recording medium, in order to compensate for an offset of the first light beam having the first wavelength; focusing, with the objective lens, a second light beam having a second wavelength, different from the first wavelength, on the optical recording medium and controlling a second decenter compensation member according to the second light beam having the second wavelength reflected from the optical recording medium, in order to compensate for an offset of the second light beam having the second wavelength and an offset between the first light beam having the first wavelength and the second light beam having the second wavelength; and dividing each of the first and second light beams into a signal beam and a reference beam, and recording the data on the optical recording medium using the signal and reference beams in a wavelength multiplexing manner, wherein the first decenter compensation member is provided on a common optical path of the first and second light beams, and the second decenter compensation member is provided on an individual optical path of the second light beam having the second wavelength.

In accordance with yet another example embodiment of the present invention, there is provided a method of reproducing holographic data from an optical recording medium using light beams having different wavelengths, the method including: focusing, with an objective lens, a first light beam having a first wavelength and a second light beam having a second wavelength, different from the first wavelength, on the optical recording medium; performing a tracking servo operation of the objective lens according to the first light beam having the first wavelength reflected from the optical recording medium; controlling a decenter compensation member according to the second light beam having the second wavelength reflected from the optical recording medium, and compensating for a recording position offset between a recording position of the first light beam having the first wavelength and a recording position of the second light beam having the second wavelength; and reproducing the data recorded on the optical recording medium using the first light beam having the first wavelength and the second light beam having the second wavelength in a wavelength multiplexing manner, wherein the second decenter compensation member is provided on an individual optical path of the second light beam having the second wavelength.

In accordance with still another example embodiment of the present invention, there is provided a holographic data recording and/or reproducing apparatus to record and/or reproduce data to/from an optical recording medium using light beams having different wavelengths, the holographic data recording and/or reproducing apparatus including: an objective lens to focus a first light beam having a first wavelength and a second light beam having a second wavelength, different from the first wavelength, on the optical recording medium; a common decenter compensation member provided on a common optical path of the first and second light beams to adjust traveling angles of the first and second light beams; and an individual decenter compensation member provided on an individual optical path of the second light beam to adjust a traveling angle of the second light beam.

In accordance with another example embodiment of the present invention, there is provided a holographic data recording and/or reproducing apparatus to record and/or reproduce data to/from an optical recording medium using light beams having different wavelengths, the holographic data recording and/or reproducing apparatus including: an objective lens to focus a first light beam having a first wavelength and a second light beam having a second wavelength, different from the first wavelength, on the optical recording medium; and at least one decenter compensation member to adjust traveling angles of the first and second light beams in order to compensate for decentering in radial and/or tangential directions of the optical recording medium.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a schematic view of a multi-wavelength micro holographic data recording and/or reproducing apparatus according to an example embodiment of the present invention;
FIGs. 2 through 5 illustrate a process of compensating for decentering in the multi-wavelength micro holographic data recording and/or reproducing apparatus of FIG. 1 when data is recorded according to an example embodiment of the present invention;
FIG. 6 illustrates an example of a recording position offset of light beams having different wavelengths; and
FIG. 7 is a schematic view of a multi-wavelength micro holographic data recording and/or reproducing apparatus according to another example embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

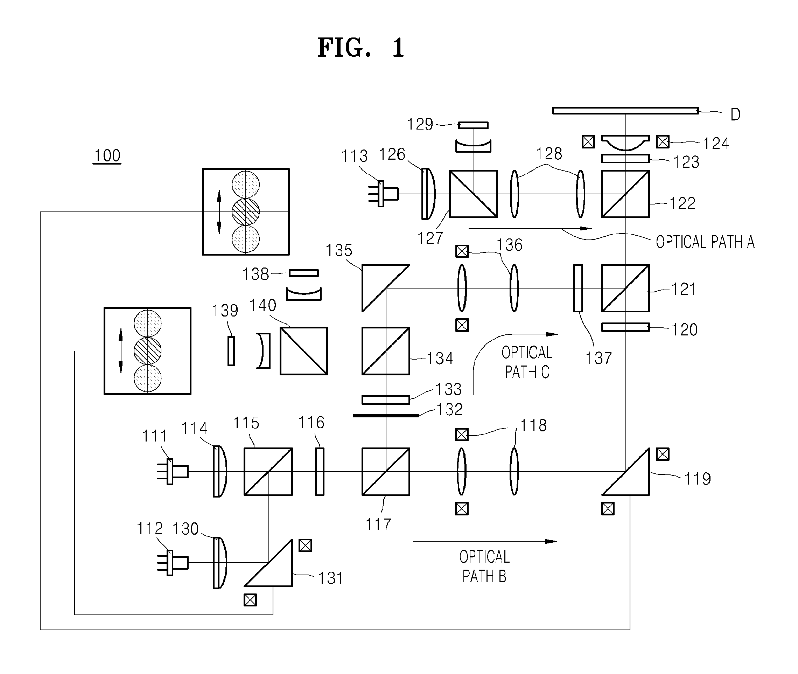

FIG. 1 is a schematic view of a multi-wavelength micro holographic data recording and/or reproducing apparatus 100 according to an example embodiment of the present invention. Referring to FIG. 1, the multi-wavelength micro holographic data recording and/or reproducing apparatus 100 includes light sources 111 and 112 emitting light beams having different wavelengths, and photodetectors 138 and 139 respectively corresponding to the light sources 111 and 112. The multi-wavelength micro holographic data recording and/or reproducing apparatus 100 simultaneously records and/or reproduces data using light beams having different wavelengths emitted from the light sources 111 and 112 by wavelength multiplexing. To this end, the multi-wavelength micro holographic data recording and/or reproducing apparatus 100 uses an optical system in which light beams having different wavelengths emitted from the light sources 111 and 112 are projected onto an optical recording medium D and light beams having different wavelengths reflected from the optical recording medium D are guided to the photodetectors 138 and 139.

Such an optical system will now be described in detail. As shown, a first collimating lens 114 to collimate a light beam having a first wavelength into a parallel beam is provided in front of the first light source 111. Likewise, a second collimating lens 130 to collimate a light beam having a second wavelength into a parallel beam is provided in front of the second light source 112. A first mirror 131 and a first dichroic prism 115 are provided to guide the light beam having the second wavelength emitted from the second light source 112 to a common optical path B. In this regard, the first mirror 131 may be a double-axis-driven mirror that is rotatable around two axes that are perpendicular to each other. Accordingly, the first mirror 131 can control the angle of the light beam having the second wavelength. Also, the first dichroic prism 115 transmits the light beam having the first wavelength and reflects light beams having other wavelengths. Accordingly, the first dichroic prism 115 reflects the light beam having the second wavelength. As a result, the light beam having the first wavelength and the light beam having the second wavelength can travel along the common optical path B.

In addition, a first relay lens 118, a second mirror 119, a diffraction optical element 123, and an objective lens 124 are sequentially provided on the optical path B in the order described, in a light traveling direction. The first relay lens 118 helps focus light beams traveling along the optical path B by referring to, for example, an output of the first photodetector 138. Like the first mirror 131, the second mirror 119 may be a double-axis-driven mirror that is rotatable around two axes that are perpendicular to each other. Accordingly, the second mirror 119 can control angles of the light beams with first and second wavelengths. The diffraction optical element 123 can be any known member that compensates for chromatic aberration of the light beam having the second wavelength with respect to the light beam having the first wavelength.

The optical system of the multi-wavelength macro holographic data recording and/or reproducing apparatus 100 may further include a light splitting member to split each of the light beam having the first wavelength and the light beam having the second wavelength into a signal beam and a reference beam. In FIG. 1, the light splitting member includes, as an example, a first beam splitter 117 provided on the optical path B between the first dichroic prism 115 and the second mirror 119, a second beam splitter 121 provided on the optical path B between the second mirror 119 and the objective lens 124, a third mirror 135 that reflects a light beam transmitted from the first beam splitter 117 toward the second beam splitter 121, and a shutter 132 provided on an optical path C between the first beam splitter 117 and the second beam splitter 121. Specifically, the first beam splitter 117 may be provided between the first dichroic prism 115 and the first relay lens 118. When data is recorded, the shutter 132 is open, and when the recorded data is reproduced, the shutter 132 is closed. The shutter 132 may be provided in any location between the first beam splitter 117 and the second beam splitter 121, or may be specifically provided immediately after the first beam splitter 117. The third mirror 135 may be a fixed mirror, and a second relay lens 136 may be further provided between the third mirror 135 and the second beam splitter 121. The second relay lens 136 helps focus light beams traveling along the optical path C with reference to, for example, an output of the first photodetector 138. In addition, the second beam splitter 121 may be provided between the second mirror 119 and the diffraction optical element 123.

The light splitting member forms the optical path C. The optical path C branches from the optical path B by the first beam splitter 117, and then recombines with the optical path B by the second beam splitter 121. Accordingly, when the shutter 132 opens, the light beams having the first and second wavelengths travel along the optical path B and the optical path C as a signal beam and a reference beam and the signal and reference beams are incident on the optical recording medium D.

Also, the light splitting member may further include a third beam splitter 134 provided between the shutter 132 and the second beam splitter 121, or specifically between the shutter 132 and the second relay lens 136. The third beam splitter 134 provides a light beam reflected from the optical recording medium D to the first and second photodetectors 138 and 139. For example, the third beam splitter 134 transmits a light beam traveling toward the optical recording medium D and reflects a light beam reflected from the optical recording medium D toward the first and second photodetectors 138 and 139. A second dichroic prism 140 is provided next to the third beam splitter 134, and the first and second photodetectors 138 and 139 are provided near the second dichroic prism 140. Accordingly, the second dichroic prism 140 reflects the light beam having the first wavelength and transmit the light beam having the second wavelength. Thus, the light beam having the first wavelength is incident on the first photodetector 138 and the light beam having the second wavelength is incident on the second photodetector 139.

Meanwhile, in the multi-wavelength macro holographic data recording and/or reproducing apparatus 100, when data is recorded, a tracking and focusing servo operation may be controlled by a separate servo control unit. Specifically, when data is recorded, information has not yet been stored in the optical recording medium D. That is, recording marks capable of being referred to in the tracking and focusing servo operation are not present on the optical recording medium D. Accordingly, the separate servo control unit is used for tracking and focusing servo operations. Instead of the recording marks, small marks capable of being referred to in the tracking and focusing servo operation during recording are formed in advance in a non-recording layer of the optical recording medium D. The servo control unit controls the tracking and focusing servo operation when data is recorded by referring to these small marks formed in the non-recording layer of the optical recording medium D.

In FIG. 1, the servo control unit includes, as an example: a servo light source 113 emitting a servo light beam to perform a servo control operation; a servo photodetector 129 to detect the servo light beam reflected from the optical recording medium D; and a servo optical system to guide the servo light beam emitted from the servo light source 113 to the optical recording medium D and to guide the servo light beam reflected from the optical recording medium D to the servo photodetector 129. The servo optical system also includes a third dichroic prism 122 provided on the optical path B between the second mirror 119 and the objective lens 124, and a fourth beam splitter 127 that transmits the servo light beam emitted from the servo light source 113 to the third dichroic prism 122, and guides the servo light beam reflected from the optical recording medium D to the servo photodetector 129. In this regard, the third dichroic prism 122 may be provided between the diffraction optical element 123 and the second mirror 119, or specifically between the diffraction optical element 123 and the second beam splitter 121. In addition, a third collimating lens 126 to collimate the servo light beam into a parallel beam may be further provided between the servo light source 113 and the fourth beam splitter 127. The servo light beam emitted from the servo light source 113 has a different wavelength from the first and second beams. For example, the third dichroic prism 122 may reflect the servo light beam emitted from the servo light source 113 and transmit light beams having other wavelengths.

This servo optical system forms an optical path A that is different from the optical path B and the optical path C. The third dichroic prism 122, however, combines the optical path A with the optical path B. In this regard, to help focus the servo light beam travelling along the optical path A, a third relay lens 128 may be further provided between the fourth beam splitter 127 and the third dichroic prism 122. Meanwhile, in the current example embodiment, three light beams traveling along different optical paths A, B, and C may be incident on the objective lens 124 at the same time. Since the three light beams that are incident on the objective lens 124 travel along different optical paths A, B, and C, it is difficult for the objective lens 124 to accurately focus the three light beams. To solve this problem, the relay lenses 118, 128, and 136 are respectively provided on the optical paths A, B, and C to support focusing of light beams travelling along the optical paths A, B, and C.

Meanwhile, to accurately guide the light beams emitted from the light sources 111,112, and 113 to the optical recording medium D along corresponding optical paths A, B, and C and to accurately guide the light beams reflected from the optical recording medium D to the photodetectors 129, 138, and 139, the first through fourth beam splitters 117,121,127, and 134 transmit or reflect each light beam according to respective traveling directions thereof. To this end, polarization characteristics of light can be used. For example, the first through fourth beam splitters 117,121,127, and 134 may be polarization beam splitters that transmit or reflect an incident light beam according to whether the incident light beam is S-polarized or P-polarized. In addition, an optical device to change the polarization state of a light beam may be further provided on each optical path A, B, and C. For example, 1/2 wavelength plates 116 and 133 are provided between the first dichroic prism 115 and the first beam splitter 117 and between the shutter 132 and the third beam splitter 134, respectively. Furthermore, 1/4 wavelength plates 120 and 137 are provided between the second mirror 119 and the second beam splitter 121 and between the third beam splitter 134 and the second beam splitter 121, respectively.

Hereinafter, a method of recording data using the multi-wavelength micro holographic data recording and/or reproducing apparatus 100, according to an example embodiment of the present invention will be described in detail with reference to FIG. 1. Referring to FIG. 1, the servo light source 113 emits a servo light beam. The servo light beam travels through the third collimating lens 126, the fourth beam splitter 127, the third relay lens 128, and the objective lens 124 along the optical path A and is incident on the optical recording medium D. In this regard, the third relay lens 128 focuses the servo light beam into a servo layer of the optical recording medium D and the objective lens 124 performs the tracking and focusing servo operation according to an output of the servo photodetector 129. Furthermore, the first light source 111 emits the light beam having the first wavelength. Herein, the shutter 132 is closed. Accordingly, the light beam having a first wavelength travels along the optical path B and is focused on the optical recording medium D by the objective lens 124. The light beam having the first wavelength reflected from the optical recording medium D is incident on the first photodetector 138 along the optical path C. The first relay lens 118 is adjusted according to an output of the first photodetector 138 in such a way that the light beam having the first wavelength is focused on the optical recording medium D. Simultaneously, the second mirror 119 is adjusted according to the output of the first photodetector 138 in order to remove an offset occurring due to an assembly error or initial setting error with regard to the optical path B and the optical path C, or an offset occurring due to disc tilt. In this aspect, the second mirror 119 operates as a decenter compensation member. Specifically, the second mirror 119 operates as a common decenter compensation member because the second mirror 119 compensates for an offset occurring on the common optical paths B and C of both of the first and second light beams. As a result, in a subsequent data recording operation, signal and reference beams having the first wavelength formed when the shutter 132 opens will be located at a same position on the optical recording medium D.

Moreover, the second light source 112 emits the light beam having the second wavelength. Herein, the shutter 132 is closed, as with the emitting of the light beam having the first wavelength. As a result, the light beam having the second wavelength travels through the second collimating lens 130, the first mirror 131, the first dichroic prism 115, and the objective lens 124 along the optical path B, and then is focused on the optical recording medium D. The light beam having the second wavelength reflected from the optical recording medium D is incident on the second photodetector 139 through the optical path C. Simultaneously, the first mirror 131 is adjusted according to an output of the second photodetector 139 to remove an assembly error occurring between the first and second light sources 111 and 112 and an error occurring when the first dichroic prism 115 is fabricated. Since the offset occurring due to an assembly error or initial setting error with regard to the optical path B and the optical path C and the offset occurring due to disc tilt have already been removed, no offset of the light beam having the second wavelength caused by the errors or disc tilt occurs. In this aspect, the first mirror 131 also operates as a decenter compensation member. Specifically, since the offset of the light beam having the second wavelength is compensated for, the first mirror 131 operates as an individual decenter compensation member for the light beam having the second wavelength. As a result, in a subsequent data recording operation, signal and reference beams having the second wavelength formed when the shutter 132 opens will be located at a same position on the optical recording medium D. In addition, the light beam having the first wavelength and the light beam having the second wavelength will be located at the same position on the optical recording medium D.

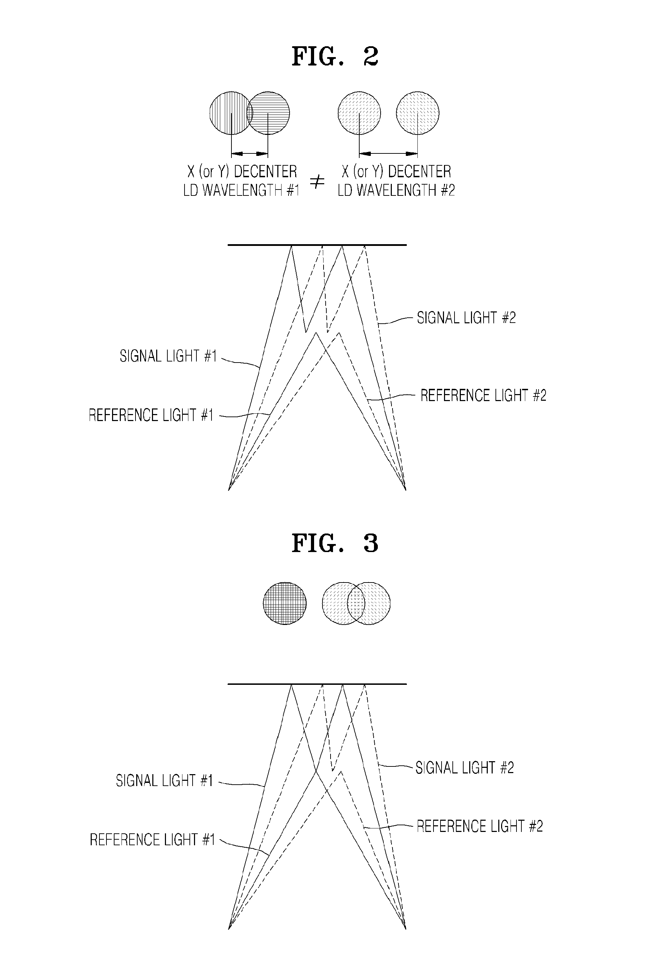

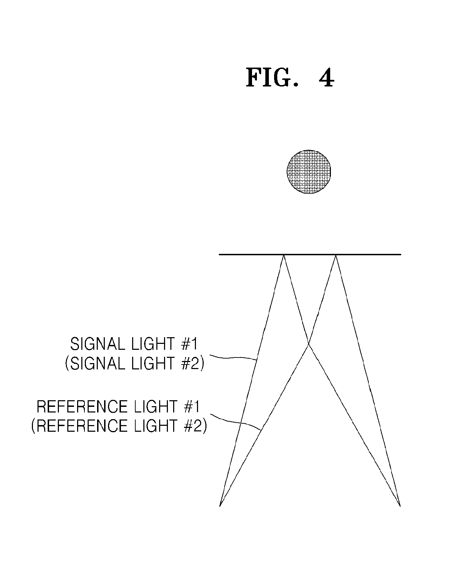

FIGs. 2-4 illustrate a process of removing offsets according to an example embodiment of the present invention. Referring to FIG. 2, initially, the signal beam and the reference beam having the first wavelength are decentered from each other. Similarly, the signal beam and the reference beam having the second wavelength are also decentered from each other. In addition, the degree of decentering of the signal and reference beams having the first wavelength is different from the degree of decentering of the signal and reference beams having the second wavelength. Furthermore, the light beam having the first wavelength and the light beam having the second wavelength are located at different positions. In FIG. 2, an X-decenter refers to decentering in a radial direction of the optical recording medium D, and a Y-decenter refers to decentering in a tangential direction of the optical recording medium D. When an offset occurring on the optical path B is removed using the second mirror 119, the result illustrated in FIG. 3 can be obtained. Specifically, the offset between the signal and reference beams having the first wavelength is removed and the offset between the signal and reference beams having the second wavelength is reduced. Also, the offset between the signal and reference beams having the second wavelength is removed using the first mirror 131. As a result, as illustrated in FIG. 4, the signal and reference beams having the first and second wavelengths are located at the same position. As such, the first mirror 131 and the second mirror 119 compensate for the decentering in the radial direction of the optical recording medium D and the decentering in the tangential direction of the optical recording medium D.

After the offsets are compensated for, the shutter 132 opens and data is recorded. Even in this case, the objective lens 124 performs the tracking and focusing servo operation by using the servo light source 113 and the servo photodetector 129. When the shutter 132 opens, each of the light beams having the first and second wavelengths is split by the first beam splitter 117 and travels along the optical paths B and C as a reference beam and a signal beam. In each case, the reference beam interferes with the signal beam on the optical recording medium D to form an interference fringe. The interference fringe is recorded on the recording layer of the optical recording medium D. In this regard, the first relay lens 118 and the second relay lens 136 are controlled according to the output of the first photodetector 138 so as to focus the reference and signal beams on the recording layer of the optical recording medium D.

Meanwhile, when a tracking servo operation is performed to record data, the objective lens 124 may shift to correspond to the eccentricity of the optical recording medium D. Specifically, when the objective lens 124 moves in the radial direction of the optical recording medium D, the signal and reference beams having the first wavelength are decentered from the objective lens 124. As a result, the signal and reference beams that are incident on the objective lens 124 have different divergence and convergence angles. Thus, as illustrated in FIG. 2, the signal beam having the first wavelength is decentered from the reference beam having the first wavelength on the optical recording medium D. Likewise, the signal beam having the second wavelength is decentered from the reference beam having the second wavelength.

The decentering between the signal beam and the reference beam caused by the shift of the objective lens 124 may be compensated for by controlling only the second mirror 119 that operates as a common decenter compensation member provided on the optical path B. This is because since offsets caused by an assembly error, an initial disc tilt, and/or optical elements' fabrication errors have already been compensated for, the level of the decenter between the signal and reference beams having the first wavelength caused by the shift of the objective lens 124 is very similar to the level of the decenter between the signal and reference beams having the second wavelength caused by the shift of the objective lens 124. The second mirror 119 may be continuously adjusted according to the movement of the objective lens 124 based on the output of the first photodetector 138.

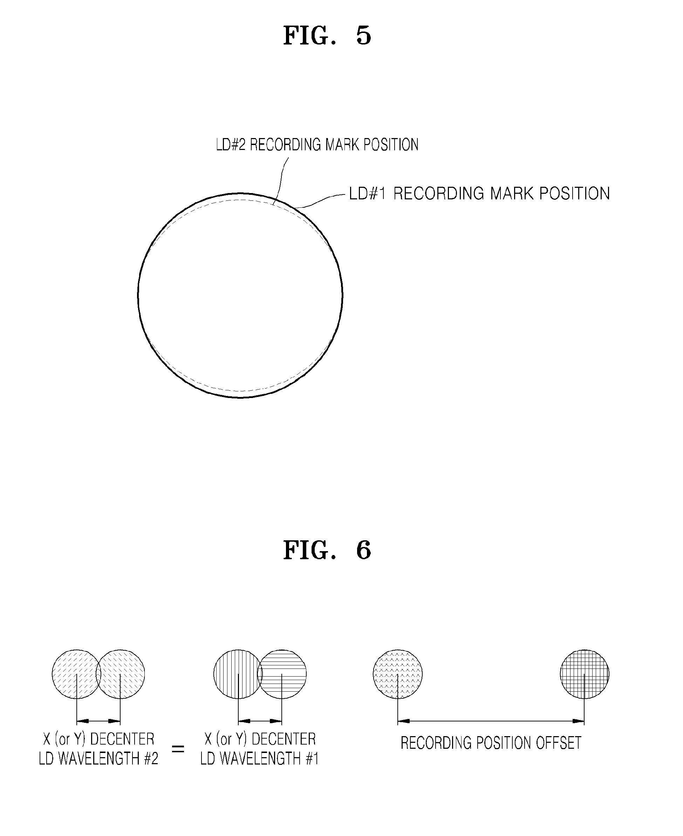

However, even when the decentering between the signal and reference beams having the first wavelength and the decentering between the signal and reference beams having the second wavelength are compensated for by using the second mirror 119, the light beams having the first and second wavelengths may have different recording positions. This is because the light beams having the first and second wavelengths are incident on the objective lens 124 at different angles. FIG. 5 is a view to explain the recording position offset. Regarding the light beam having the first wavelength, the signal beam is decentered from the reference beam by the shift of the objective lens 124. Similarly, regarding the light beam having the second wavelength, the signal beam is also decentered at a same level from the reference beam by the shift of the objective lens 124. When these decenterings are compensated for by using the second mirror 119, the signal and reference beams having the first wavelength are coincident with each other and the signal and reference beams having the second wavelength are coincident with each other. However, there is still a recording position offset between the recording position of the light beam having the first wavelength and the recording position of the light beam having the second wavelength, as depicted in FIG. 5.

Moreover, the eccentricity of the optical recording medium D is periodically changed during one complete rotation of the optical recording medium D. For example, during one complete rotation of the optical recording medium D, the eccentricity of the optical recording medium D is periodically changed from being the largest to being the least. FIG. 5 illustrates an example of a recording position offset between the recording position of the light beam having the first wavelength and the recording position of the light beam having the second wavelength when the optical recording medium D makes one complete rotation. Referring to FIG. 5, the least recording position offset and the largest recording position offset may occur twice, respectively, during one complete rotation of the optical recording medium D. For example, an angle difference between the two least recording position offsets is 180° and an angle difference between the least recording position offsets and the largest recording position offsets is 90° on the recording medium D. Conventionally, removing the recording position offset caused by light beams having different wavelengths was important. However, in the multi-wavelength micro holographic data recording and/or reproducing apparatus 100 according to an example embodiment of the present invention, data is recorded without removing the recording position offset caused by light beams having different wavelengths, and then, the recorded data is reproduced in consideration of the recording position offset.

Hereinafter, a method of reproducing data using the multi-wavelength micro holographic data recording and/or reproducing apparatus 100, according to an example embodiment of the present invention will now be described in detail. When data is reproduced, it is not necessary to use the separate servo control unit to control a tracking servo operation because data is already recorded on the optical recording medium D. Instead, the tracking servo operation of the objective lens 124 can be performed by using the light beam having the first wavelength emitted from the first light source 111. For example, according to the output of the first photodetector 138, the tracking servo operation of the objective lens 124 is performed along a data recorded position where data has been recorded with the light beam having the first wavelength. The separate servo control unit including the servo light source 113 and the servo photodetector 129 controls only the focusing servo operation of the objective lens 124. In addition, when data is reproduced, the interference between the signal beam with the reference beam is irrelevant, and only the reference beam is needed. Accordingly, the shutter 132 remains closed. As a result, the light beams having the first and second wavelengths emitted from the first light source 111 and the second light source 112, respectively, travel to the optical recording medium D only along the optical path B, and the light beams having the first and second wavelengths reflected from the optical recording medium D are respectively incident on photodetectors 138 and 139 along the optical path C. Furthermore, the second mirror 119 is fixed during the reproduction operation, because the offsets caused by, for example, an assembly error, an initial disc tilt, and/or optical elements' fabrication errors have been compensated for.

Meanwhile, when data is reproduced, the decentering caused by the shift of the objective lens 124 may not be taken into account because only a reference beam is used. That is, the objective lens 124 may track along the recording position in which data has been recorded with the light beam having the first wavelength, according to the output of the first photodetector 138. For example, the objective lens 124 may track along a first recording position that has been recorded with the light beam having the first wavelength as illustrated in FIG. 6. In this regard, since the recording position offset exists between the recording position of the light beam having the first wavelength and the recording position of the light beam having the second wavelength, the light beam having the second wavelength is incident on a second recording position that has been recorded with the light beam having the second wavelength illustrated in FIG. 5. To do this, the first mirror 131, which is an individual decenter compensation member as described above, is used. That is, according to the output of the second photodetector 139, the second mirror 131 is continually adjusted according to the second recording position so that the light beam having the second wavelength is incident on the second recording position.

According to an example embodiment of the present invention, the light beam having the first wavelength and the light beam having the second wavelength have high wavelength selectivity. Accordingly, each light beam has a relatively high diffraction efficiency with respect to a mark recorded with the light beam having its own wavelength and a relatively low diffraction efficiency with respect to a mark recorded with a light beam having a different wavelength. By using this method, tracking can be performed with each light beam. In conventional cases, complicated structures are used to remove an offset between light beams having different wavelengths. However, in the multi-wavelength micro holographic data recording and/or reproducing apparatus 100 according to an example embodiment of the present invention, tracking can be performed with each light beam. As a result, such complicated structures are not needed.

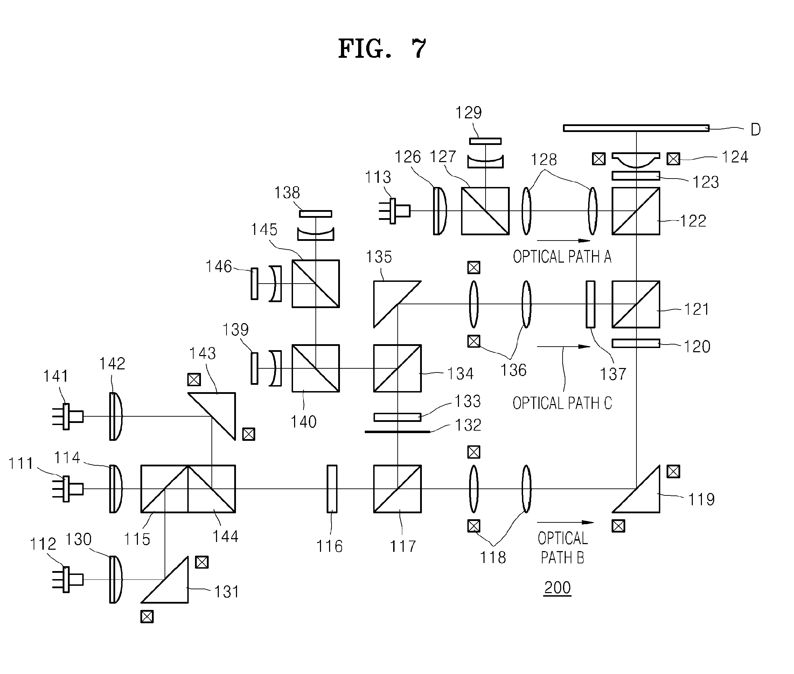

Meanwhile, although the multi-wavelength micro holographic data recording and/or reproducing apparatus 100 uses two light beams having different wavelengths, it is understood that three or more light beams having different wavelengths can also be used in other example embodiments. FIG. 7 illustrates such a holographic data recording and/or reproducing apparatus 200 using three light beams having different wavelengths, according to another example embodiment of the present invention. The multi-wavelength micro holographic data recording and/or reproducing apparatus 200 illustrated in FIG. 7 is different from the multi-wavelength micro holographic data recording and/or reproducing apparatus 100 illustrated in FIG. 1 in that a third light source 141 emitting a light beam having a third wavelength, a third collimating lens 142 to collimate the emitted light beam into a parallel beam, and a fourth dichroic prism 144 to guide the light beam emitted by the third light source 141 to the optical path B are further provided. Furthermore, a fourth mirror 143 to reflect the light beam emitted by the third light source 141 to the fourth dichroic prism 144 is provided between the third collimating lens 142 and the fourth dichroic prism 144. The fourth mirror 143 may be, for example, a double-axis-driven mirror that is rotatable around two axes that are perpendicular to each other. Accordingly, the fourth mirror 143 can control a traveling angle of the light beam having a third wavelength. The fourth dichroic prism 144 reflects the light beam having the third wavelength and transmits light beams having other wavelengths.

A fifth dichroic prism 145 is further provided between the first photodetector 138 and the second dichroic prism 140. The fifth dichroic prism 145 transmits the light beam having the first wavelength and reflects the light beam having the third wavelength. The light beam having the third wavelength reflected by the fifth dichroic prism 145 is detected by a third photodetector 146. Individual offset compensation with respect to the light beam having the third wavelength is performed by controlling the fourth mirror 143 according to the output of the third photodetector 146 in the same manner as described above. Also, when data is reproduced, a third recording position that has been recorded with the light beam having the third wavelength can be tracked by controlling the fourth mirror 143 according to the output of the third photodetector 146.

As illustrated in FIG. 7, the sum of the number of the double-axis-driven mirrors 131 and 143 operating as an individual decenter compensation member and the number of the double-axis-driven mirror 119 operating as a common decenter compensation member is equal to the number of the light sources 111,112, and 141. Specifically, the double-axis-driven mirrors 131 and 143 are only assigned for light reflected by the dichroic prisms 115 and 144. For example, a double-axis-driven mirror is not directly assigned for the light beam having the first wavelength that is transmitted through the first dichroic prism 115 and the fourth dichroic prism 144. Also, the double-axis-driven mirror 119 operating as a common decenter compensation member may be adjusted according to the output of the photodetector 138 for detecting the light beam having the first wavelength transmitted through the dichroic prisms 115 and144 on the light source side. As described above, the double-axis-driven mirrors 119, 131, and 143 operating as the common decenter compensation member and the individual decenter compensation members primarily compensate for decentering in a radial direction of the optical recording medium D and decentering in a tangential direction of the optical recording medium D. However, in other embodiments of the present invention, other members can be used instead of double-axis-driven mirrors as a decenter compensation member. For example, each of the light sources 111, 112, and 141 can be driven along two axes. In addition, each of collimating lenses 114, 130, and 142 can be driven along two axes.

While there have been illustrated and described what are considered to be example embodiments of the present invention, it will be understood by those skilled in the art and as technology develops that various changes and modifications, may be made, and equivalents may be substituted for elements thereof without departing from the true scope of the present invention. Many modifications, permutations, additions and sub-combinations may be made to adapt the teachings of the present invention to a particular situation without departing from the scope thereof. For example, more than three light sources can be provided according to other embodiments. Furthermore, the structural arrangement of each component of the holographic data recording and/or reproducing apparatus 100 and 200 may vary according to other embodiments. As an example, the first photodetector 138 and the second photodetector 139 may be switched, such that the second dichroic prism 140 reflects the light beam having the second wavelength and transmits the light beam having the first wavelength. Accordingly, it is intended, therefore, that the present invention not be limited to the various example embodiments disclosed, but that the present invention includes all embodiments falling within the scope of the appended claims.

## Claims

1. A holographic data recording and/or reproducing apparatus to record and/or reproduce data to/from an optical recording medium using light beams having different wavelengths, the holographic data recording and/or reproducing apparatus comprising:
a first light source to emit a first light beam having a first wavelength;
a second light source to emit a second light beam having a second wavelength different from the first wavelength;
a first photodetector to detect the first light beam reflected from the optical recording medium;
a second photodetector to detect the second light beam reflected from the optical recording medium; and
an optical system to guide the first and second light beams emitted from the first and second light sources to the optical recording medium along a common optical path and to guide the first and second light beams reflected from the optical recording medium to the first and second photodetectors, respectively, the optical system comprising:
an objective lens to focus the first and second light beams on the optical recording medium,
a common decenter compensation member provided on the common optical path to adjust traveling angles of the first and second light beams, and
an individual decenter compensation member provided on an individual optical path of the second light beam to adjust a traveling angle of the second light beam.

2. The holographic data recording and/or reproducing apparatus as claimed in claim 1, wherein:
the optical system further comprises a dichroic prism to transmit a light beam having a predetermined wavelength and to reflect light beams having other wavelengths; and
the first wavelength or the second wavelength is the predetermined wavelength.

3. The holographic data recording and/or reproducing apparatus as claimed in claim 2, wherein the first wavelength is the predetermined wavelength such that the individual decenter compensation member is assigned to the second light beam reflected by the dichroic prism.

4. The holographic data recording and/or reproducing apparatus as claimed in claim 3, wherein the individual decenter compensation member is a driven mirror that reflects the second light beam to the dichroic prism.

5. The holographic data recording and/or reproducing apparatus as claimed in claim 4, wherein the individual decenter compensation member is adjusted according to an output of the second photodetector.

6. The holographic data recording and/or reproducing apparatus as claimed in claim 2, wherein the common decenter compensation member is a driven mirror that reflects the first and second light beams traveling from the dichroic prism toward the objective lens.

7. The holographic data recording and/or reproducing apparatus as claimed in claim 6, wherein the common decenter compensation member is controlled according to an output of the first photodetector.

8. The holographic data recording and/or reproducing apparatus as claimed in claim 2, wherein the optical system further comprises a light splitting member to divide each of the first and second light beams into a signal beam and a reference beam.

9. The holographic data recording and/or reproducing apparatus as claimed in claim 8, wherein the light splitting member comprises:
a first beam splitter provided on the common optical path between the dichroic prism and the common decenter compensation member;
a second beam splitter provided on the common optical path between the common decenter compensation member and the objective lens;
a mirror to reflect a light beam travelling from the first beam splitter toward the second beam splitter; and
a shutter provided on an optical path between the first beam splitter and the second beam splitter.

10. The holographic data recording and/or reproducing apparatus as claimed in claim 9, wherein the shutter opens when the data is recorded to the optical recording medium and closes when the data is reproduced from the optical recording medium.

11. The holographic data recording and/or reproducing apparatus as claimed in claim 9, wherein the light splitting member further comprises:
a third beam splitter provided between the shutter and the second beam splitter; and
at least one dichroic prism guiding the first and second light beams reflected from the third beam splitter to the first and second photodetectors, respectively.

12. The holographic data recording and/or reproducing apparatus as claimed in claim 1, further comprising:
a servo light source to emit a servo light beam for a focusing and tracking servo operation of the objective lens when data is recorded ;
a servo photodetector to detect the servo light beam reflected from the optical recording medium; and
a servo optical system to guide the servo light beam emitted from the servo light source to the optical recording medium and to guide the servo light beam reflected from the optical recording medium to the servo photodetector.

13. The holographic data recording and/or reproducing apparatus as claimed in claim 1, wherein the common decenter compensation member and the individual decenter compensation member compensate for decentering in radial and/or tangential directions of the optical recording medium.

14. The holographic data recording and/or reproducing apparatus as claimed in claim 1, further comprising:
a third light source to emit a third light beam having a third wavelength, different from the first and second wavelengths;
a third photodetector to detect the third light beam reflected from the optical recording medium,
wherein:
the optical system further comprises a third beam individual decenter compensation member provided on an individual optical path of the third light beam to adjust a traveling angle of the third light beam, and
the common decenter compensation member adjusts traveling angles of the first, second, and third light beams.

15. The holographic data recording and/or reproducing apparatus as claimed in claim 1, wherein a total number of decenter compensation members is equal to a total number of light sources.
